**Europäisches Patentamt**

**European Patent Office**

**Office européen des brevets**

(11) Publication number : **0 547 882 A1**

## (12) EUROPEAN PATENT APPLICATION

(21) Application number : **92311487.0**

(22) Date of filing : **16.12.92**

(51) Int. Cl.⁵ : **H04N 5/16**

(30) Priority : **17.12.91 US 809385**

(43) Date of publication of application :
**23.06.93 Bulletin 93/25**

(84) Designated Contracting States :
**DE FR GB**

(71) Applicant : **MATSUSHITA ELECTRIC INDUSTRIAL CO., LTD**
**1006, Oaza Kadoma, Kadoma-shi**
**Osaka 571 (JP)**

(72) Inventor : **Dischert, Lee Robert**
**37 Bridge Road**
**Medford, New Jersey 08005 (US)**
Inventor : **Topper, Robert Joseph**
**131 Crooked Billet Road**
**Hatboro, Pennsylvania 19040 (US)**

(74) Representative : **Dixon, Donald Cossar et al**
**Gee & Co. Chancery House Chancery Lane**
**London WC2A 1QU (GB)**

(54) **Method and apparatus for determining the average picture level of a video signal.**

(57) A method and apparatus for producing a signal representing the average picture level of a video signal during a preselected time interval, typically a field of a television video signal, utilizes a comparator (10) and counter (12) to integrate the difference between the level of an incoming video signal (at A) and a reference signal (at B) during the preselected time. The output (20) of the counter (12) represents the average picture level for the field and is used for subsequent correction of the video signal.

Fig. 1

This invention relates to apparatus and method for determining the average picture level for a video signal and the use of the average picture level to correct the video image for changes in illumination of the scene.

In the transmission of television signals, the light level determines the amount of power required to transmit the signal. Natural illumination varies over an extremely wide brightness range. Color video cameras and color video display apparatus, however, do not have the wide dynamic range required to acquire and reproduce this wide brightness range of natural illumination. Since television equipment is unable to reproduce the entire brightness range of natural illumination, current video scene reproduction practices require special techniques, such as supplemental fill-in lighting, to provide a pleasing and natural video image by reducing the brightness range required to be reproduced by the television equipment.

To further illustrate the problem, in a scene with a high brightness level, the black items will tend to be lit up, i.e., appear somewhat grey, because of the reflections of light. Reflections of light also may brighten the entire picture, lightening black areas so that they do not appear natural. One method for correcting a high brightness level and associated image imperfections and making the reproduced video image more natural, is to perform what is known as "flare correction" in which black levels are "pulled down" or lowered to some calculated "natural" level. Conversely, if the image has a low brightness level, the "flare correction" will increase the black levels, i.e., "raise" the overall black level. This process for correcting video images to better encompass brightness levels present in a specific image requires the determination of an "average picture level" (APL) representing the "average" brightness in the image. The APL is then used to set the black level for best image reproduction.

Television images are made up of individual fields, each field having multiple lines made up of individual pixels. For example, in the NTSC system used for television transmission in the United States, two sequential fields, each having 262.5 lines, make up a frame, or video image. It is customary to determine the average picture level (APL) by calculating an average picture level either for an entire video image, one or more frames, or in the alternative, for a 262.5 line field. Based upon the APL, adjustments are made to the video camera for the particular brightness of the scene, thereby improving the reproduction of the video images.

One method used in the past for calculating the APL was to use a very-low-pass digital filter that yields a single APL value for the entire image. Very low -pass digital filters, however, require many taps or large complicated circuitry to give an accurate value over such a large area. Recursive filters may be used to limit the size and complexity of the circuitry, but recursive filters having linear-phase responses are less accurate.

An example of a digital signal averaging circuitry which can be used to determine the APL is shown in U.S. Patent No. 4,589,019 to Dischert et al. which describes a successive adder for adding up all the pixels within a field. The Dischert et al, patent eliminates the need for a large adder by using a counter to count the number of times that a smaller adder overflows (or carries). However, this system requires two counters, as well as the ability to process a relatively large number of bits in the two counters to ensure that they can store the maximum number of counts that may accumulate in a worst case scenario.

## Summary of the Invention

Accordingly, it is an object of this invention to provide a method and apparatus for determining the average picture level of a video image which overcomes the problems in the prior art. Specifically, it is an object of the invention to provide an improved system for determining the average picture level of a video signal to improve the overall signal reproduction from a video camera.

It is a more specific objective of the present invention to provide a method and apparatus for determining the average picture level of a video signal using minimal circuitry, having high accuracy and linear phase response.

In accordance with the invention, the average picture level is determined by comparing the level of a preset reference signal with each input video signal produced by a predetermined number of pixels, for example, within a field or full frame of the video signal. As a result of each comparison, either a first signal indicative of the input signal being greater than the reference signal or a second signal indicative of the input signal being smaller than the reference signal is produced. These signals are applied to a counter which produces an output count signal indicative of the average picture level proportional to the number of pixels under consideration.

In one specific embodiment of the invention, a digital magnitude comparator having a first input, a second input, a positive output, and a negative output compares the level of the incoming digitized video signal applied to its first input to a digital reference level applied to its second input. A positive output signal from the comparator indicating that the video signal is greater than the reference level is input to an "up count" enable of a digital up/down counter. A negative output from the magnitude comparator indicating that the video signal is less than the reference level is input to the "down" count enable of the up/down counter. The up/down counter keeps a running count as to how many times the pixel amplitude of the video signal is greater or less than the reference.

In essence, the count kept in the counter and available at the output of the counter, is representative of the arithmetic sum of the counts of comparisons of the video signal with a reference level. The output of the counter is the average picture level signal which is used to correct the video signal, by, for example, using flare correction or other known techniques. The reference level typically is initially set to an appropriate value, or initialized typically at a mid-range of the expected video signal. Thereafter, the reference level is adjusted based upon the results of the up/down counter derived from the previous video field or frame.

In another embodiment of the invention, a digital magnitude subtractor subtracts the reference level from the pixel amplitudes of the input video signals to produce two signals. The first signal is a sign output having a positive and negative state. The positive state is generated if the video input signal is greater than the reference level and the negative state is generated if the video signal is less than the reference level. The second signal, representative of the magnitude of the subtraction, controls a variable frequency clock for generating variable frequency pulses that change frequency in relation to the magnitude of the result of the subtraction performed by the magnitude subtractor. Thus, the magnitude of the result of the subtraction controls the frequency, or counts per unit time of the variable frequency clock. The variable frequency clock can be implemented with a plurality of dividers preprogrammed to divide the output of a fixed frequency clock to various clock rates. An up/down counter responds to the sign output from the magnitude subtractor and the varied frequency clock. When the sign output is largely positive, variable frequency pulses from the variable frequency clock are at a higher rate, i.e., the counter counts up faster. When the sign output is only slightly positive, the pulses from the variable frequency clock are at a lower rate, i.e., counted up slower. As a consequence, the counter will contain at the end of a video image, or after any arbitrary time interval or number of pixels, the arithmetic sum of the number of counts generated by the variable frequency clock as triggered by the comparisons conducted during that video image or arbitrary time interval. This count represents the APL of the video image.

The digital APL device of this invention is used with a video system having automatic light level detection to adjust the sensitivity of the video camera in response to the count output by the digital APL. The camera provides synchronizing circuits that generate start and reset signals to reset the counter in synchronization with the video field or image being transmitted as well as initializing the value of the threshold used to determine the APL of the image.

These, together with other objects and advantages which will be subsequently apparent, reside in the details of construction and operation as more fully hereinafter described and claimed, reference being had to the accompanying drawings forming a part hereof, wherein like numerals refer to like parts throughout.

## Brief Description of the Drawings

Features of the invention which are believed to be novel are set forth with particularity in the appended claims. The invention itself, however, together with its further objects and advantages thereof, may best be understood by reference to the following description, when taken in conjunction with the accompanying drawings, in which:

FIG. 1 is a block diagram of an APL system in accordance with a first embodiment of the present invention; and

FIG. 2 is a block diagram of an APL system in accordance with a second embodiment of the present invention.

## Description of the Preferred Embodiments

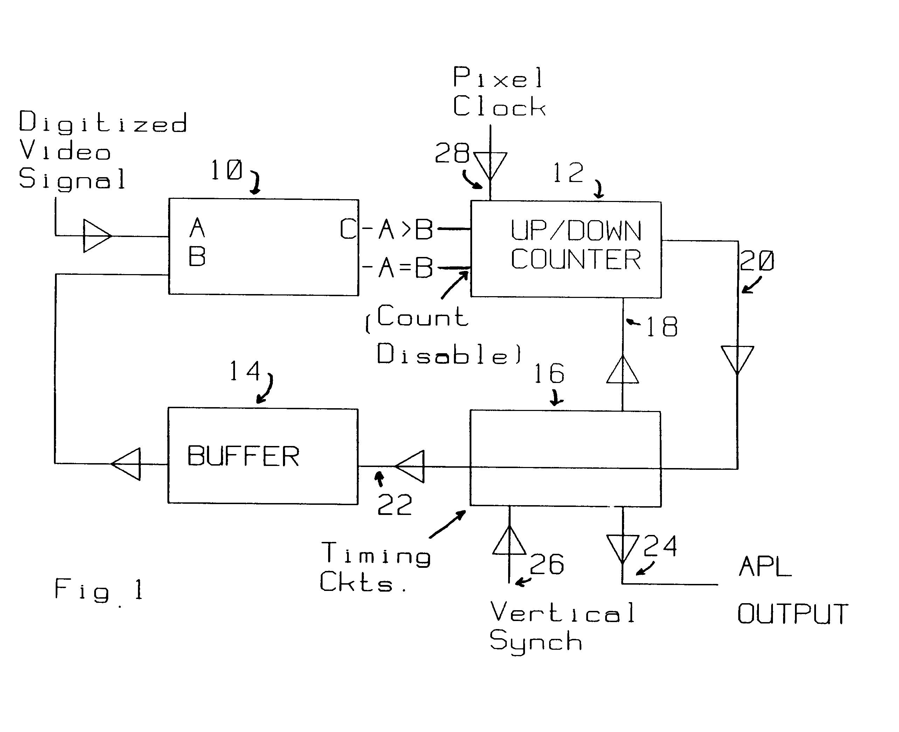

Referring to FIG. 1, magnitude comparator 10 compares a reference average picture level digitally stored in buffer 14 with each pixel amplitude of the incoming digitized video signal. The incoming digitized video signal is input to input A of magnitude comparator 10, and the reference average picture level stored in buffer 14 is input to input B of magnitude comparator 10. The reference level is stored in buffer 14 in synchronism with the video signal's "frame start" or other convenient timing signal denoting the beginning of the time interval over which the APL level is to be computed. Magnitude comparator 10 is well known and it can comprise, for example, a SN74LS85 magnitude comparator manufactured by Texas Instruments.

Magnitude comparator 10 compares the digitized incoming video signal with the reference level initially set at, for example, a mid-grey level and stored in buffer 14. The result is output to up/down counter 12, which can, for example, be an SN74LS169B counter manufactured by Texas Instruments. If the amplitude of a pixel from the input video signal is greater that the reference level in buffer 14, a first digital signal indicative of this comparison is output to the up/down control of counter 12, i.e., the count in counter 12 is incremented by one count. Thus, counter 12 is incremented by one for each pixel that is greater than the reference level. Conversely, if the incoming video signal is less than the reference level, the count in counter 12 is decremented by one count.

If the incoming video signal is equal to the reference level, no signal is output from magnitude comparator 10, and therefore counter 12 is neither incremented nor decremented. A pixel clock input 28 is applied to counter 12 at its clock input. This ensures that the counter will update its stored count once per pixel.

At the end of each video field, timing circuits 16 receive the normal video vertical synchronization signal 26 marking the beginning of a new video field. At that time, counter 12 is reset by a signal applied to reset line 18 and the average picture level stored in counter 12 is ready to be read out. Concurrently, buffer 14 is loaded either with the previous field's APL count or with a new value (if any) of the reference average picture level to which the next portion of the incoming video signal will be compared. Loading the buffer 14 is done upon signal from timing circuits 16 via line 22 in a well known manner.

Counter 12 in combination with magnitude comparator 10, keeps track, within a field, or some other predetermined time, of how many pixels are brighter than the reference level or, conversely, how many pixels are dimmer than the reference level stored in buffer 14. This procedure results in a final count at the end of a video field, or other predetermined time, stored in counter 12, that indicates a count corresponding to an average picture level related to the video field or the predetermined time period. The average picture level output signal is output via line 20 and timing circuits 16 on line 24 and used, for example, to initiate standard flare correction to adjust the black level. This correction can be made on a field-by-field, or frame-by-frame, or other basis until a preselected criterion for image quality is met.

As an example, a threshold APL count can be established. If the APL count is above that threshold by, for example, 25%, it can be concluded that the gain circuits or camera aperture setting are too large for the image being viewed and the camera is adjusted accordingly. Conversely, if the APL count is 25% below the threshold, the image may be deemed "too dim" and again the appropriate gain correction to avoid this is made.

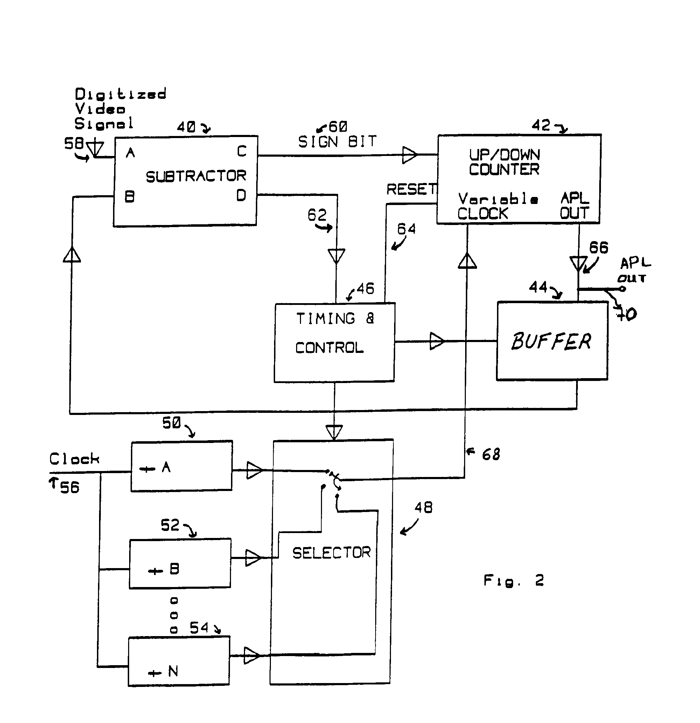

FIG. 2 illustrates another embodiment of the present invention in which a variable rate counter is used. Unlike the first embodiment, counter 42 counts the time equivalent units (not pixels) during which the incoming signal is greater than, or less than, a reference counter output. In this embodiment, the rate at which the counter 42 is clocked from selector 48 is variable depending upon the digital magnitude of the difference between the input signal 58 and the reference level stored in buffer 44. Detailing the structure of this embodiment, as shown in FIG. 2, the incoming digital video signal 58 (a positive unipolar number) is input to input A of subtractor 40, and the output of reference level buffer 44 is input to input B of subtractor 40. The sign bit output 60 from output C of subtractor 40 indicates if the reference level 44 is greater than or less than the incoming video signal. This sign bit 60 controls the counter 42 to allow incrementing or decrementing of counter 42. The signal 62 from output D of subtractor 40 is the magnitude of the difference between the incoming video signal 58 (at input A) and the digital quantity stored in buffer 44 (at input B). This difference signal 62 is used to control the frequency of the variable clock signal 68, while the variable clock signal 68 is used to increment or decrement counter 42.

In operation, the frequency of the variable clock signal 68 is controlled by applying the signal from output D of subtractor 40 to control timing and control decoder 46, which, in turn, controls the switching of selector 48 to select one of dividers 50, 52, , . . 54. Divider 50 divides clock 56 frequency by a fixed integer, A, which, for example, is set to 2. Divider 52 divides clock 56 frequency by a fixed integer B, which is set, for example, to 4. Divider 54 is set to divide clock 56 frequency by an integer N, set, for example, to 16. More than 3 dividers, as well as different divisors, can be used to accommodate any dividing scheme appropriate to the variable clock rate input to counter 42. Clock source 56 inputs a steady clock rate to the dividers 50, 52 . . . 54. Thus, the clock input rate to counter 42 is changed depending upon which divider is selected by selector 48. Reset signal 64 from timing and control circuit 46 is applied in synchronism with the beginning of a new video field or frame, or other time interval and resets counter 42 to initiate a new count.

To further explain the operation of this embodiment of the invention, the magnitude of the subtraction performed by subtractor 40, when output on line 62, will cause selector 48 to connect the output of divider 50, 52 or 54 to the variable clock input of up/down counter 42. The variable clock input will be a signal at the frequency of clock 56 divided by the divisor of 50, 52 or 54. The variable clock signal applied to counter 42 can, in this example, be any one of three frequencies, differing by a factor of 2, 4 and 16 from the frequency of clock 56. To further explain this example, if the magnitude of the signal on line 62 is large, the variable clock will be connected to divider 50, corresponding to a "high" clock rate on line 68, thereby changing the count stored in counter 42 relatively fast. If the magnitude of the signal on line 62 is 1/2 of the previous case, selector 48 will connect the variable clock input to divider 52, whose output frequency is also 1/2 that of divider 50. Now, the count in counter 42 will be changed at one-half the rate as compared to the rate of divider 50, indicating that the quantity on line 62 is also only one half of the previous magnitude.

To summarize, the digital magnitude difference signal 62 corresponding to the difference between input A and B of subtractor 40 is used to select a variable clock frequency signal to be applied via line 68 to counter 42 via selector 48. The sign bit output signal on line 60 representing the sign of the comparison of the digital video signal and the reference signal is applied to control incrementing or decrementing of counter 42. The number of pulses of the variable clock signal are counted up or down by counter 42 depending on the sign of the sign bit signal on line 60. The total count obtained during a frame, a field, or other time interval, is the average picture level used to perform television camera exposure corrections. Control signals to control the operation of the system, reset the counters and change the value of the reference signal stored in the buffer 44 are generated as would be understood by a worker skilled in this art. As with the embodiment of FIG. 1, the reference level stored in buffer 14 is changed, for example, after each frame, dependent upon the APL of the previous frame. Similarly, the APL is output via line 70 to effect flare correction in the television camera.

Instead of the exemplary three dividers, many more can be used to accommodate each possible digital state present in difference signal 62. For example, if signal 62 is an 8-bit signal, then 256 divisors similar to 50, 52 and 54 could accommodate the 256 possible states of signal 62. Similarly, if subtractor 40 generates a 4-bit signal for the difference signal 62, then sixteen divisors similar to 50, 52 and 54 can accommodate the sixteen possible states of the 4-bit difference signal 62. In turn, each of these sixteen divisors can be connected to counter 42 in response to the magnitude signal 62 via selector 48. However, the number of divisors need not equal the number of states.

The following are examples of some components that can be used to construct the embodiment of FIG. 2, and are provided as examples only:

| FIG. 2 | MANUFACTURER | PART # | DESCRIPTION |
|---|---|---|---|
| Subtractor 40 | TEXAS INSTRUMENTS | SN74LS382 | ALU/FUNCTION GENERATOR |
| Counter 42 | TEXAS INSTRUMENTS | SN74LS169B | COUNTERS |
| Control Decoder 46 | TEXAS INSTRUMENTS | TBP24S10 | ROM |
| Selector 48 | TEXAS INSTRUMENTS | SN74150 | SELECTOR |
| Dividers 50, 52, 54 | TEXAS INSTRUMENTS | SN74LS382 | ALU/FUNCTION GENERATOR |

In a more general sense, the system described above is a device for calculating the average of a sequence of digital quantities (or words), in this case video pixels, compared to a digital reference. The general components of this averaging device are a digital magnitude comparator, i.e., comparator 10 in FIG. 1 or subtractor 40 in FIG. 2, where the comparison between the incoming flow of digital quantities (or words) and a fixed digital threshold is performed. Both comparator 10 in FIG. 1 and subtractor 40 in FIG. 2 output a "positive" output if a value (or element) of the incoming sequence of digital quantities exceeds the value of the threshold and a "negative" output if a particular element in the sequence of digital quantities is less than the threshold. A counter is incremented or decremented in response, respectively, to the "positive" or "negative" (sign) outputs from the digital comparators. The cumulative effect of incrementing or decrementing the counter is to obtain an arithmetic sum of the number of elements (in FIG. 1), or counts (in FIG. 2) generated during a comparison of digital quantities (words) with a threshold digital quantity which represents the average quantity for the sequence.

Although the present invention has been shown and described with respect to preferred embodiments, various changes and other modifications which are obvious to persons skilled in the art to which the invention pertains are deemed to lie within the spirit and scope of the invention. For example, the above-described embodiments utilize the APL in conjunction with a flare correction device to adjust the picture. However, the APL could also be used to adjust the power supply to the color camera, or to control the iris opening for an automatic iris controller. This invention can also be used as a general purpose digital low-pass filter.

## Claims

1. A system for calculating the average picture level of a predetermined sequence of digital video signals, comprising:

    a magnitude comparator for sequentially comparing a reference digital signal with the magnitude of a preselected part of said predetermined sequence of digital video signals, said comparator generating comparison signals indicative of said digital video signals being greater than said reference digital signal and indicative of said video signal being less than said reference digital signal; and

    a counter responsive to the said comparison signals for producing a cumulative count signal representative of the average picture level of said predetermined sequence of digital video signals.

**2.** The system of Claim 1 further including means for storing said reference digital signal, and means for changing said stored reference digital signal in response to said cumulative count accumulated in said counter.

**3.** The system of Claim 1 or 2 further including means for synchronizing operation of said counter with the beginning of said sequence of digital video signals.

**4.** A system for determining the average picture level of a video signal over a preselected time period, comprising:

means for providing a reference signal;

means for comparing during a preselected interval said reference signal with a digital signal representative of each pixel of said video signal to produce a first signal when said pixel level is greater than said reference word and a second signal when said pixel level is smaller than said reference word; and

means responsive to said first and second signals for computing a count representative of the difference between how many times said first signal occurs and how many times said second signal occurs, said count indicating the average picture level of the video signal during the preselected period.

**5.** A system for determining the average picture level of a digital video signal having pixel components over a preselected time interval comprising:

a digital magnitude subtractor having a first input, a second input, a sign output and a magnitude output;

means for applying a reference signal to said second input of said magnitude comparator and said video signal to said first input, wherein said magnitude subtractor subtracts said reference signal applied to said second input from said pixel components applied to said first input and provides a first sign output if said second input is greater than said first input and a second sign output if said second input is less than said first input and a magnitude output dependent upon the magnitude of the difference between said reference signal and said pixel components;

a variable frequency generator responsive to the magnitude output of said subtractor for generating a signal having a frequency dependent upon the magnitude output of said magnitude subtractor; and

counting means responsive during a preselected time interval to the sign outputs from said magnitude subtractor and the outputs of the variable frequency generator for counting up said variable frequency pulses whenever said first sign output occurs and for counting down said variable frequency pulses whenever said second sign output occurs to provide a signal indicative of the average picture level during a preselected time interval.

**6.** The system of Claim 5 wherein said variable frequency generator comprises a plurality of dividers for dividing the output of a fixed frequency clock.

**7.** A method for calculating the average picture level of a predetermined sequence of digital video signals, comprising the steps of:

sequentially comparing a reference digital signal with a digital quantity representing the magnitude of a preselected part of said predetermined sequence of digital video signals, said comparison generating comparison signals indicative of said video signal being greater than said reference digital signal and indicative of said video signal being smaller than said reference digital signal; and

producing a count signal by counting the number of occurrences of signals dependent on said comparison signals wherein said count signal is representative of the average picture level for said predetermined sequence of digital video signals.

**8.** A video system with automatic light level compensation, comprising:

a video camera having an aperture control means and an output representing an image acquired by said camera, said output consisting of a sequence of digital signals, wherein said aperture control means can control the average picture level of said sequence of digital signals;

a system for determining the average picture level of said sequence of digital signals including:

a magnitude comparator for sequentially comparing a reference digital signal with the magnitude of said sequence of digital signals, said comparator generating comparison signals indicative of said digital signals being greater than said reference digital signal and indicative of said digital signals being less than said reference digital signal; and

a counter responsive to said comparison signals for producing a count signal representative of the average picture level for said predetermined sequence of digital video signals; and

means responsive to said count signal for adjusting said aperture control means to effect automatic light level compensation in said camera.

9. A system for determining the average of a sequence of digital quantities compared to a reference, comprising:

a digital magnitude comparator having a first input, a second input, a positive output, and a negative output,

means for applying said sequence of digital quantities to said first input and a reference quantity to said second input,

wherein said magnitude comparator compares said sequence of digital quantities applied to said first input with said reference quantity applied to said second input and activates said positive output if said second input is greater than said first input and activates said negative output if said second input is less than said first input;

a digital up/down counter (having a third output) connected to said first and second outputs of said magnitude comparator for counting the occurrences of said first and second outputs so that said third output from said up/down counter is representative of the arithmetic sum of counts of comparisons of said sequential digital quantities when compared to said reference quantity.

10. A system for determining the average of a sequence of digital quantities compared to a reference, comprising:

a digital magnitude subtractor having a first input, a second input, a sign output, and a magnitude output,

means for applying said sequence of digital quantities to said first input and a reference quantity to said second input, wherein said magnitude subtractor compares said sequence of digital quantities with said reference quantity and provides a positive sign output if said second input is greater than said first input and a negative sign output if said second input is less than said first input and a magnitude output dependent upon the difference in magnitude between said first input and said reference quantity;

a variable frequency generator responsive to said magnitude output of said subtractor for generating signals having a frequency dependent upon said magnitude output of said magnitude subtractor; and

counting means responsive to said sign output from said magnitude subtractor and said output of said variable frequency generator for counting up said signals from said variable frequency generator whenever said positive sign output occurs and for counting down said signals from said variable frequency generator whenever said negative sign output occurs to produce a total count signal representative of said average of the sequence of digital quantities.

Fig. 1

Fig. 2

**European Patent Office**

# EUROPEAN SEARCH REPORT

Application Number

EP 92 31 1487

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 7, no. 62 (E-164)15 March 1983 & JP-A-57 208 770 ( HITACHI SEISAKUSHO ) | 1,2,4,7,9 | H04N5/16 |
| Y | | 8 | |
| A | * abstract * | 5,10 | |
| | --- | | |
| X | PATENT ABSTRACTS OF JAPAN vol. 12, no. 449 (E-686)25 November 1988 & JP-A-63 176 069 ( TOSHIBA CORP ) | 1,4,7,9 | |
| Y | | 8 | |
| A | * abstract * | 5,10 | |
| | --- | | |
| D,Y | US-A-4 589 019 (DISCHERT ET AL) | 8 | |
| D,A | * column 3, line 37 - line 59 * * abstract * | 1-7,9,10 | |
| | --- | | |
| A | PATENT ABSTRACTS OF JAPAN vol. 8, no. 44 (E-229)25 February 1984 & JP-A-58 200 674 ( MATSUSHITA DENKI SANGYO ) * abstract * | 3 | |
| | ----- | | TECHNICAL FIELDS SEARCHED (Int. Cl.5) |
| | | | H04N |

The present search report has been drawn up for all claims

| Place of search | Date of completion of the search | Examiner |
|---|---|---|
| BERLIN | 25 MARCH 1993 | JONSSON B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)